# EUROPEAN PATENT APPLICATION

(11) **EP 1 404 102 A1**
(43) Date of publication of application: **31.03.2004**
(21) Application number: 02354145.1
(22) Date of filing: 26.09.2002
(51) Int. Cl.: H04N 1/00

(54) **System and method for printing from a digital camera image proof sheet**

(71) Applicant: Hewlett-Packard Company, A Delaware Corporation, Palo Alto, CA 94304 (US)
(72) Inventor: Brouhon, Patrick, 38410 Saint Martin d'Uriage (FR)
(74) Representative: Lloyd, Richard Graham

(57) **Abstract**

The invention provides a method and apparatus for manipulating digitally stored images. The method includes the steps of recording and storing digital representations of one or more images; transferring to a printer one or more of the plurality of digital images. The printer generates a proof-sheet which incorporates a graphical representation of at least one of the images and a plurality of image selection and/or image manipulation user designation areas. The proof-sheet is further is adapted to contain location information which identifies any physical spatial location on the surface of the proof-sheet. To manipulate the images, the user applies indicia to at least one of the user designation areas on the proof-sheet using a pen adapted to record the spatial location of the indicia on the proof-sheet. Once such markups are made on the proof-sheet, the spatial location of the indicia are transmitted to the printer. The printer is adapted to translate the indicia spatial location into printing and/or image manipulation commands. The images are then processed and printed based on the user commands. The invention also provides apparatus adapted to carry out this method. The invention can be applied to consumer or professional photographic systems and may use digital image data captured with a large variety of photographic systems and data transfer methods.

## Description

### Technical Field

The present invention relates to methods and apparatus for use in digital photography. More particularly, although not exclusively, the invention relates to a system and method for enabling a user to easily manipulate and print images taken using a digital still camera (DSC) using neither a personal computer nor a complex graphics manipulation interface. The invention also relates to a system and method for enabling a user to review, manipulate and print digital images.

### Background Art

Advances in digital imaging as well as the availability of inexpensive high-density solid-state memory have brought about a revolution in photography. Mid to high-end digital still cameras (DSCs) now offer resolutions which, when printed using a high quality laser or inkjet printer, approach that of conventional darkroom techniques. As this type of photography has developed and gained popularity, new and innovative multimedia solutions have been developed to meet consumer needs for storage, display and manipulation of graphical images.

It has long been possible to scan standard conventionally produced photographic images in order to digitally manipulate, transmit and store them. However, the move to pure digital image recording of images raises significant obstacles to the widespread acceptance of digital photography. These obstacles include the perceived difficulty involved in uploading digital images from the DSC to the viewing platform or to a printing device. Here, a viewing platform will usually be a personal computer. However it may be a PDA, tablet computer, hybrid or other type of display device.

Various solutions for image manipulation and printing exist in the marketplace. These include the use of proprietary data transfer standards whereby a direct cable connection is established between the DCS and the viewing platform in order to upload the images. The stored images can then be manipulated using a graphics program such as Adobe Photoshop™ and printed.

This process can be slow and fraught with problems stemming from the need to configure a data link between the DCS and the viewing platform as well as the relative complexity of many image manipulation programs.

Although known digital image applications can be extremely powerful, the complexity of the image manipulation software can be daunting as often most consumers only require a limited subset of a typical packages functionality. This explains to some extent the coexistence of software packages that range from highly sophisticated image manipulation environments to very basic image selecting, viewing, cropping and printing packages.

Notwithstanding the availability of relatively simple image manipulation packages, the upload and management of digital images can be problematic. This is exacerbated by the ease with which digital images can be recorded. Unlike conventional photography, there is no film to consume and with increased memory capacities, it is common to take a large number of images of widely varying quality and subject matter. Further, many models of DSC have automatic exposure bracketing and sequential image functionality. This can lead to the retention of even larger numbers of images.

It is therefore sometimes impractical to upload and/or print every one out. Some images may be of poor quality, duplicates or of no interest. Managing a large number of image files on a personal computer can also be complicated and time-consuming, particularly if some are to be viewed, compared and/or discarded. Present techniques also requires that a viewing platform of some type be used.

What is needed is a system for previewing, manipulating and printing digital images which is modeled on the print-based tasks normally associated with traditional silver-halide photography techniques.

One solution which goes some way toward solving this problem is exemplified by the applicants copending US application serial number US 2002/0033965 A1 entitled "System and Method for Printing and Scanning a User-Completed Still Camera Image Proof Sheet and Order Form" .

The system disclosed in that application provides a user-friendly data interchange methodology whereby solid-state memory cards used in DSCs, such as SD, MMC and

Flash Memory, can be plugged directly into a printer.

This avoids the need to upload the digital images using any direct physical connection. The user records the images using a DSC having such a card (or other removable media), removes the card from the camera and inserts it into the corresponding slot on the printer.

The printer is configured to provide a simplified display interface which includes a proof-sheet printing function. The user prints out and writes user-applied indicia, or "markups", on the proof sheet and feeds it back through the printer. The printer, operating as a scanner, then images and interprets the marked up proof-sheet and prints the desired images with any corrections or modifications as specified by the user-applied indicia.

This technique therefore mimics the steps in conventional photographic techniques, primarily in the context of treating the memory card like a roll of film and the proof-sheet as an order-form which specifies how the 'film' is to be printed.

This technique does have limitations in that the complexity of image manipulation is limited by the scanners "vocabulary" in terms of marking images for printing and cropping and adjusting various image characteristics. It is also constrained to some extent by the requirement that the printer be able to scan the proof-sheet at a specified level of accuracy. While this may be acceptable for high-end printers where sometimes the printer incorporates scanning functionality anyway, it may be cost-prohibitive for low-end consumer printer units which need to be simple and inexpensive to manufacture. Also, it has been found that scanning methods have usability difficulties such as inadvertent mis-scanning of the proofsheet.

One other solution which partially addresses the aforementioned problems exists in the form of International Patent Application no WO 00/72237A1. However this disclosure is focused primarily on using a paper-based network interface to design and build online photo-albums. Some manipulation functionality is described, however the techniques remain relatively complex and do not attempt to replicate established techniques for review and printing of photographic images. In particular, the applicants Netpage™ technology is adapted to provide what is essentially a file management interface where conventional image manipulation commands are input via optically enabled position sensitive paper. The techniques described in WO 00/72237A1 also involve repeated printing and updating of image layouts and the associated pen command interface areas on the printed netpage. Such a technique while being suitable for the more sophisticated user, is likely to be inaccessible to a consumer-level user. A further complexity is that the system described in this document requires two-pass printing to allow superimposition of image and command information over the top of the position data array so that an infra-red sensitive pen can read the pen position even when marking up regions obscured by human visible areas.

Thus it would be a significant advantage if the conventionally-based photographic printing steps could be carried out, but at the same time allowing more freedom and flexibility in how a proof-sheet is marked up and the image manipulation information is communicated to the printer. It remains important to preserve the computer-independent approach, keep the system simple and, where possible, reflect the conventional techniques of conventional print photography. It is also important that the techniques be capable of implementation on legacy hardware with little or no hardware modification and in a way which enhances the users photographic experience in an intuitive and productive way.

### Disclosure of the Invention

In one aspect the invention provides for a method of manipulating digitally stored images, the method including the steps of:
- recording and storing digital representations of one or more images;
- transferring to a printer, said printer capable of generating representations of selected ones of the plurality of images, one or more of the plurality of digital images;
- the printer generating a proof-sheet incorporating a graphical representation of at least one of the images and a plurality of image selection and/or image manipulation user designation areas, wherein the proof-sheet is adapted to contain location information which identifies physical spatial locations on the surface of the proof-sheet;
- the user applying user-applied indicia to at least one of the user designation areas on the proof-sheet using a pen adapted to record the location of the indicia on the proof-sheet; and
- transmitting data relating to the location of the indicia to the printer from the pen whereby the printer is adapted to translate the data into printing and/or image manipulation commands.

Preferably the location information which identifies physical spatial locations on the surface of the proof-sheet is arranged so as not to optically interfere with the one or more images and/or the image selection and/or image manipulation user designation areas.

Preferably, the method includes the step of printing the one or more images based on said indicia spatial location information data.

In a preferred embodiment, the one or more images are stored on read/write capable media wherein the printer is adapted to receive the media therein in order to read the data stored thereon.

Preferably the paper incorporates a plurality of glyphs, said glyphs adapted to provide position information to the pen whereby, said position information is communicated to the printer. Preferably the position information is provided to the pen optically.

In an alternative embodiment, the absolute position of the pen may be detected using a position location system based on infra-red detection, electromagnetic spatial orientation or the like.

In a preferred embodiment, the position of the user-applied indicia are thus recorded by optically imaging the glyphs at the time that the indicia are applied.

Data related to the position of the user-applied indicia are recorded by the pen, then transmitted to the printer.

Alternatively, the data relating to the position of the user-applied indicia are transmitted to the printer substantially continuously, buffered for transmission or otherwise streamed.

The data relating to the position of the user-applied indicia are preferably transmitted using a wireless communication means.

In a less preferred embodiment, the data is transmitted via cable, optical or similar means.

In a preferred embodiment, the data is transmitted to the printer at the instigation of the user, preferably by the user activating a switch or sensing means on the pen.

The invention also provides for a printing system including:
- a printer adapted to receive image data relating to one or more digital images taken by a user, the printer further adapted to produce a proof-sheet detailing the graphical images; and
- a pen, wherein the paper and pen are adapted so that user-applied indicia corresponding to image manipulation commands which are applied by the user to the proof-sheet can be transmitted to the printer by recording the spatial position of the user-applied indicia on the proof-sheet and transmitting same to the printer.

The pen is preferably adapted to image a glyph pattern which provides a unique optical pattern for any point on the proof-sheet, this allowing the pen and thus the position of the indices to located on the proof-sheet.

### Brief Description of the Drawings

The present invention will now be described by way of example only and with reference to the drawings in which:
- Figure 1:: illustrates a simplified schematic of a system for transferring digital images to a printer from a digital still camera (DSC);
- Figure 2:: illustrates a simplified schematic of a printer adapted to receive digital spatial position information;
- Figure 3:: illustrates the process of marking up a proof-sheet with an optical position sensing pen and the transmitting position data to a printer;
- Figure 4:: illustrates an enlargement of a user-designated area on a proof-sheet;
- Figure 5:: illustrates an example of a proof-sheet with user-applied indicia; and

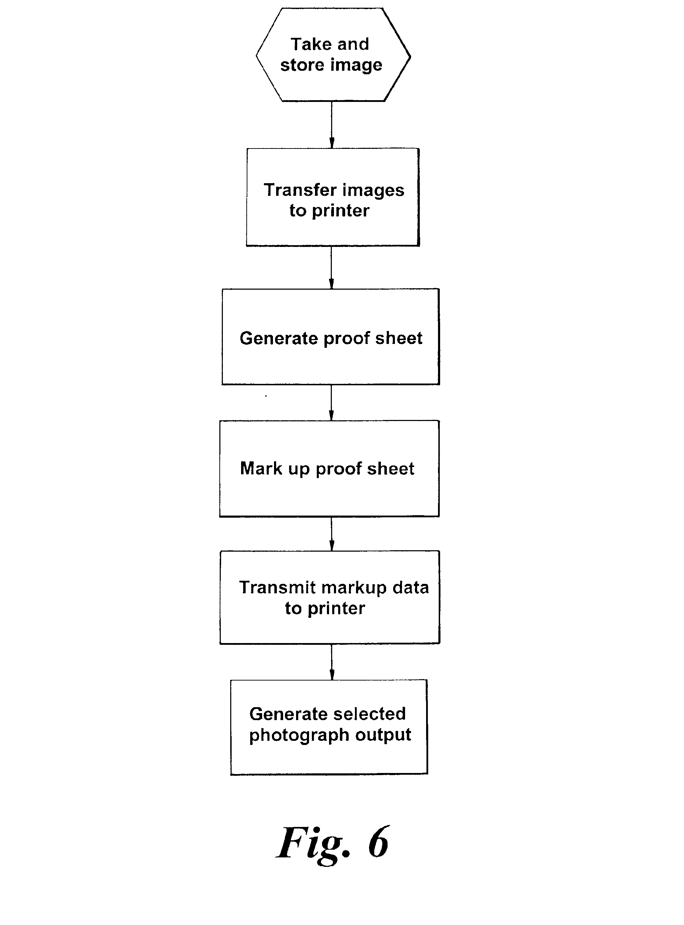

- Figure 6:: illustrates a flow diagram of a method of manipulating digital images via a proof-sheet.

### Best Mode for Carrying Out the Invention

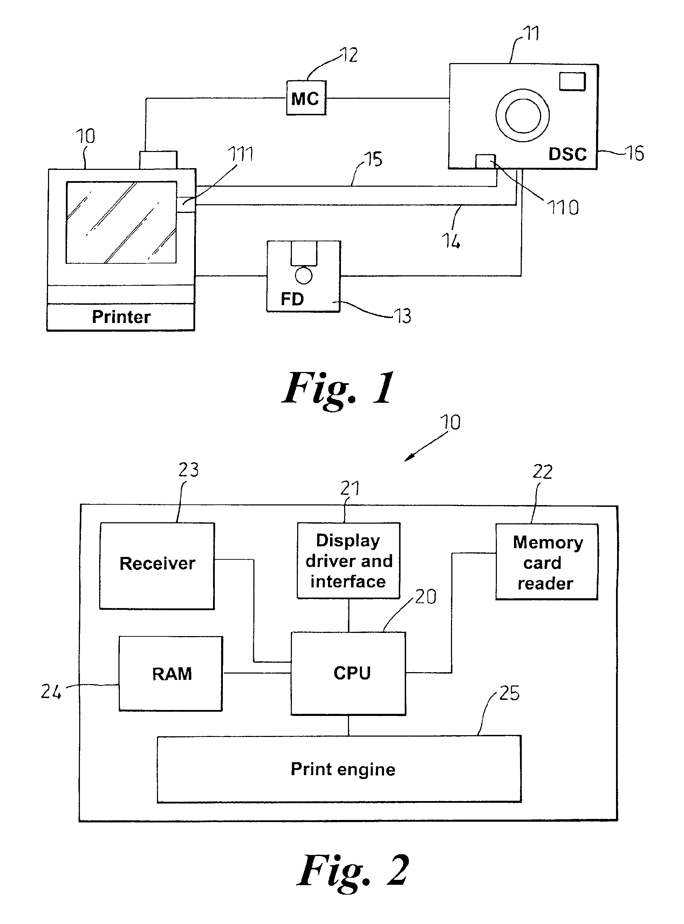

Figure 1 illustrates a simplified schematic of an embodiment of the invention which allows digital images to be transferred from a digital still camera (DSC) 11 to a printer 10. This transfer is achieved without using an intervening viewing or transfer platform such as a personal computer. Details of this process can be found in the applicants copending application US 2002/0033965 A1 the disclosure ofwhich is herein incorporated. Various mechanisms can be used for transferring the image data. These include physically plugging a DSC memory card 12 into the printer 11, using a floppy disk 13 to transfer the files or transmitting them via an infra-red or RF link 14. For completeness, data transfer via a physical hardwired cable or camera connection 15 is also shown. The preferred method is to use removable storage media which is initially connected to the DSC and then, physically moved to the printer. For example, the printer may incorporate a Compact Flash card reader so that a CF card resident in the camera may be simply inserted into the printer reader. This approach avoids using cables and to a degree mimics the "film roll" photography paradigm or exposing a roll of film on an outing and removing it from the camera for processing.

Figure 2 shows a functional schematic of a printer configured in accordance with one embodiment of the invention. The core component of the printer incorporates a central processing unit 20 and a print engine 25. The CPU 20 coordinates the functions of the printer including transferring image data from removable memory 12 via the memory card reader 22, to the RAM 24 for subsequent handling and printing.

The print engine 25 is shown schematically only. This component includes media handling hardware, print head and other components found in a variety of printers. The construction and operation of such components is known to one skilled in the art and, for brevity, will not be discussed in detail except where necessary to illustrate the operation of the invention.

The CPU 20 is connected to a display and interface unit 21 which acts as an enunciator panel to transmit the printer state and command results to the user. This may be in the form of a LCD display with a menu interface. A number of display and interface approaches are possible depending on the level of sophistication of the printer and the complexity of the printers functions. The invention may also be very suitable for a consumer-level device with no display. This would lead to reduced manufacturing costs and further extend the notion of a very simple digital photograph selection and printing system.

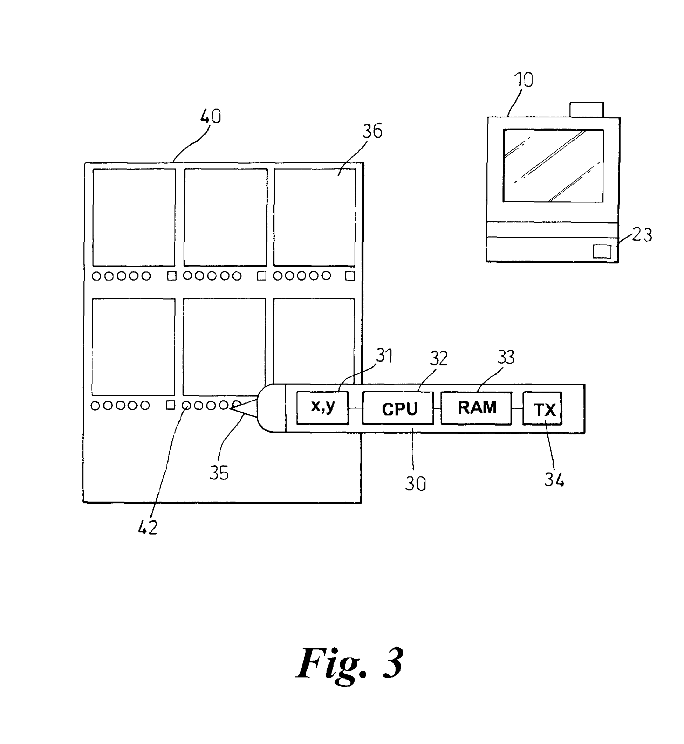

This embodiment of the printer also includes a receiver 23. This component is adapted to receive image manipulation data in the form of spatial location data corresponding to the position of the user-applied indicia drawn by the user on the proof-sheet (see 40 in figure 3). In the embodiment shown, the receiver is an RF unit 23 connected to the CPU 20. The unit 23 may conform to the Blue Tooth or other wireless data connectivity standard.

Figure 3 illustrates the operation of an embodiment of the invention. Here, the printer 10 is configured generally as shown in figure 2 and the system operates as follows.

The user wishes to manipulate images which are digitally recorded then stored in the memory card 12. Manipulation is understood to mean selecting particular images for printing, cropping, enhancing and specifying the number of copies to be printed. Other manipulation functions are possible. The complexity of these functions will depend on the target user and it is anticipated that at a consumer level, core functions such as those described above will be provided. More sophisticated functionality such as color balance, batch image manipulation and the like may be provided. The invention is flexible in this regard as different user designation areas may be configured to correspond to virtually any printer function.

The first step is for the user to record and store digital representations of one or more images on a DSC 11. This can be done with any compatible camera. The images are then transferred to a printer 10 capable of generating hardcopy representations of selected ones of the plurality of images which the user has transferred.

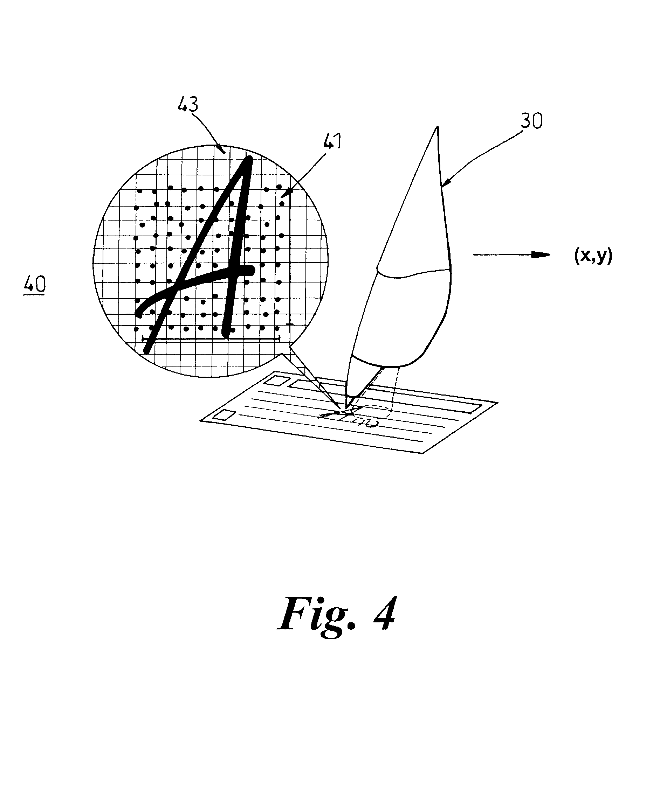

The user then operates the printer 10 to generate a proof-sheet 40. The proof-sheet 40 is adapted to incorporate a graphical representation 36 of at least one of the transferred images as well as including a plurality of image selection and/or image manipulation user designation areas 42. The proof-sheet is further is adapted to contain location information (41 in figure 4) which identifies any physical spatial location on the surface of the proof-sheet 40.

Once the proof-sheet is printed, the user draws indicia ("markups") 43 on at least one of the user designation areas 36, 42 on the proof-sheet 40 using a pen 30 adapted to record the spatial location of the indicia 43 on the proof-sheet 40.

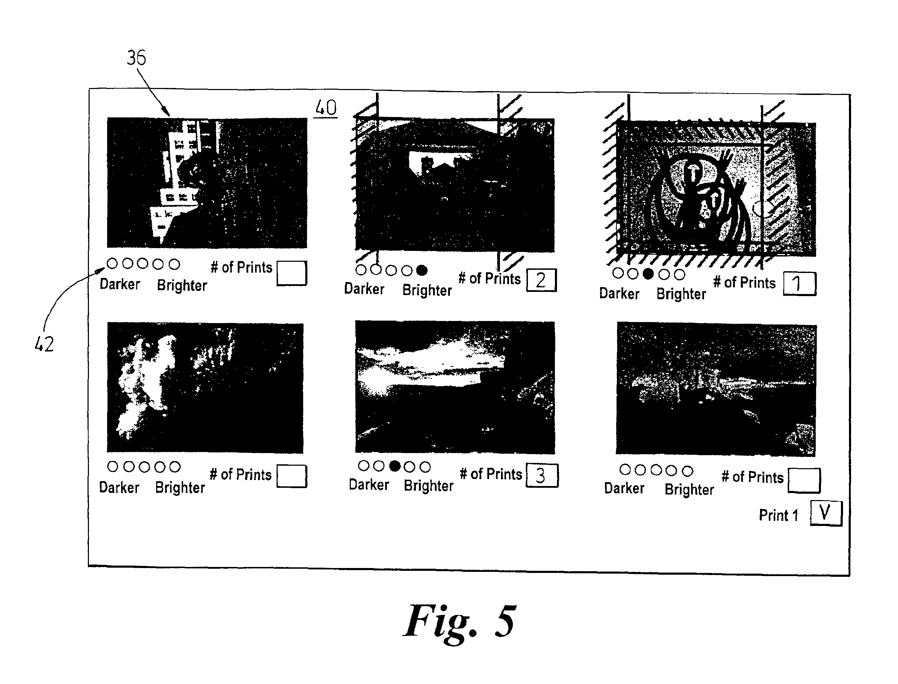

An exemplary proof-sheet including user-applied indicia is shown in figure 5. Here the proof-sheet includes six images 36 and incorporates a set of relatively simple user designation areas which correspond to the selection of one or more of any image for printing, brightness enhancement and cropping function. As can be seen from figures 4 and 5, the user marks up the proof-sheet 40 using the specially adapted pen 30 which records the position of the user-applied indicia on the page relative to location information 41.

To allow the system to interpret the user-applied indicia in a intuitive and natural way, the proof-sheet paper incorporates a plurality of glyphs 41 printed thereon which are adapted to provide position information to the pen. When the user marks up the proof-sheet. He or she simply writes on the proof-sheet as one would when marking up a standard photographic proof-sheet. However, the pen is adapted so that whenever ink is applied, it images the glyphs on the paper. The patterns of glyphs within the field of view of the pen are unique for any location on the proof-sheet. As the pen moves across the paper, the pen images the glyphs thereby providing spatial location data which can then be correlated with the function of the user designation area 42 and thus be acted on by the printer. It is not necessary or, in fact, desirable that the pen 30 image or record the ink marks 43 applied by the user. All that is required is the position information corresponding to where on the proof-sheet the user applied the markups.

In a preferred embodiment the ink used in the pen and visible to the user is transparent to the pens imaging system while the ink used to form the glyphs on the proof-sheet is visible to the pens imaging system. Thus the user can ostensibly obscure the glyphs by marking up the proof-sheet while the pen will continue to record the position of the user-applied indicia anywhere on the page.

Details of how glyph patterns may be decoded to specify a unique position on the proof-sheet can be found in US patent 6,208,771 to Xeroc PARC, the disclosure of which is herein incorporated by reference.

The spatial location of the indicia is then transmitted to the printer 10 whereby the printer is adapted to translate the indicia spatial location into printing and/or image manipulation commands. This translation is possible as the printer intelligence is adapted to correlate the characteristics or meaning of the user designation areas on the proof-sheet. For example, with respect to image number two in figure 5, it can be seen that the user has selected two copies of this image with enhanced brightness (on a five-increment scale). The user has also specified a certain amount of cropping indicated by the lines and hatched areas.

In this example, using the specially adapted pen and proof-sheet combination, the pen records the locations of the user-applied indicia and transmits them to the printer 11. The printer 11 interprets the location information of the indices and correlates the position of the indicia with print commands. Thus the "2" in the print number box is converted into position data located within the boundary of the user designation area indicated by the box and further recognized as the numeral "2". To this end the pen or the printer may include optical character recognition (OCR) capability to enable it to correctly interpret the users input. However, where the position of the indicia is the sole determinant of the function, OCR is not necessary. Similarly, the selected brightness indicia is converted to position information for that specific user designation area and thus the printer "knows" that the image is to have its brightness enhanced. Cropping information is collected and interpreted similarly.

Once the location of the indicia is transferred to the printer, it prints the corresponding images based on the spatial location information.

The invention is particularly advantageous as the user designation areas may be configured so that overprinting of the human-readable information does not interfere with the pen-readable information. As can be seen, the user designation areas are selected so that the system will always have sufficient information to interpolate between user designation areas in the case of cropping where the user-applied line passes through the image. Also, the manipulation areas need only be marked somewhere within their boundaries to record the fact of a users designation of that area. Thus, there is no need to print the proof-sheet in a double pass, the first applying the IR visible position information and the second the human-readable ink. Both may be applied at once. Also, it is feasible that the position information could be applied using the same technology as the image information. This is due to the realization that only relatively low position resolutions are needed given the particular requirements of a useful proof-sheet production system. In order to mimic proof-sheet functionality it is not necessary to implement full character recognition or extremely high resolution pen location. The intuitive way in which a photographer marks up a proof-sheet is almost necessarily low in machine-level accuracy. What is required is flexibility, lack of expense, speed and a flexible, easily learnt interface.

Thus, the invention provides a substantial advantage in that a fully functioning consumer-level integrated print-station can be manufactured without special print technology or multiple inks. The commercial implementation of the invention can therefore be manufactured relatively inexpensively and provided at an accessible cost to the home photographer.

In an alternative, less preferred, embodiment, the absolute position of the pen 30 may be detected using a position location system based on infra-red detection, electromagnetic spatial orientation or the like.

As noted above, once the data related to the position of the user-applied indicia is recorded by the pen, it is transmitted to the printer. The wireless communication system can be based on the Blue Tooth standard and the timing and sequence of data transfer be configured according to the users or manufacturers preferred method. To this end, the data relating to the position of the user-applied indicia can be transmitted to the printer continuously. Using this method, as the user marks up the proof-sheet, indicia position information is continuously streamed to the printer via the wireless link.

However, a more preferred system is where the user periodically transmits the data to the printer. For example this might be done after a particular sequence of markups have been applied. According to another method, the data can be continuously stored and/or interpreted by the printer. Once the user has triggered a completion command, the printer parses the user-applied indicia position information and converts this into commands for manipulating and printing the images.

The data transfer from the pen to the printer may be triggered using a switch mounted on the pen. Other data/command transfer paradigms are possible including the user periodically ticking a "data send" designated area on the proof-sheet. Alternatively, the printer could poll the pen for this initiation signal whereupon the previously buffered information is acted on. As noted above, in the preferred embodiment, the data is transmitted to the printer at the instigation of the user as this allows the user to mark up the proof-sheet intuitively and in a manner similar to that used in conventional proof-sheet markup.

The glyph pattern is distinctive with the glyphs being positioned according to a predefined algorithm (see US 6,208,771 ). Therefore the position encoding information must be printed accordingly. This can be done by storing a bitmap of a glyph background in RAM and printing this as a background when the proof-sheet is printed.

Alternatively, the glyph background may be calculated on the fly and printed concurrently with the proof-sheet images and user designated areas.

An interpreter module (not shown) in the printer will control what actions are taken in response to marking specific user-designated areas on the proof-sheet. The module may be in the form of firmware stored in EEPROM. Thus a certain proof-sheet generating application or application version may use a specified proof-sheet layout with the corresponding mappings between designation areas on the sheet with image control functionality. The interpreter can be configured to operate by determining boundary requirements for user-applied information. Certain areas of the proof-sheet can be correlated with specific functions or image manipulation processes and so the interpreter need only recognize the location of the markup on the page and there will generally be no need to decode data embedded into the background location information.

A development toolkit may be developed to allow the more sophisticated user to configure specific proof-sheet formats and functions. This could be in the form of an interactive simplified menu on the printer whereby one of a pre-configured proof-sheet format could be selected. Alternatively, the toolkit may be in the form of a PC application which could upload the proof-sheet format to the printer.

A further aspect of the invention includes providing specific image processing functionality within the printer. Many third party image manipulation packages include pre-configured filters which can be used to output black and white, sepia or various colour enhancements. The invention contemplates a printer preconfigured with such functionality where these operations are triggered by means of the user-applied markups on the proof-sheet. Again a development toolkit could be used to develop specific filters of image processing functions which could then be uploaded to the printer and selected as a printer mode via the 'paper-interface'. This closely mimics the established "workflow" approach followed by both print and digital photographers whereby a series of specific steps are followed in processing raw images downloaded from a DSC. These processes are often configured to run on a PC as a batch process via an image processing application front-end. The present invention provides a method an apparatus for extending the functionality of the proof-sheet approach to allow batch processing to be programmed into a printer.

This functionality may be useful in situations where a vendor wishes to provide a consumer printer with a number of built-in functions such as sepia toning, panorama output and other artistic effects which would normally have to be carried out via an image processing application.

To this end, the functionality of the integrated printer and proof-sheet application and proof-sheet layout may be changed or upgraded by reflashing the EEPROM in the printer core module. This will provide a substantial advantage as it will not be generally necessary to manufacture multiple hardware configurations corresponding to different proof sheet printing and interpretation functionality. For example, a consumer-level printer may have a more limited set of markup options than that for a commercial printer. Of course, hardware changes may be desired where a range of print features or qualities are needed. However, it is envisaged that the invention may be implemented in across a variety of user environment complexity levels without requiring anything more than a different printer BIOS and/or glyph bitmaps or glyph generation engines.

It is also anticipated that some of the image processing functionality previously used in the context of the viewing platform (personal computer or otherwise), may be integrated into the printers intelligence. With increases in processing power of processor chips and visual processing units coupled with cheaper memory, more image processing functions may be included. These would be limited only by their amenability to command interaction via user-applied indices (markups) on the printed proof-sheet. However, as noted above, complexity in image manipulation can be accommodated within the accuracy of the invention, using more complicated and detailed user-designation areas on the proof-sheet.

It is believed that the invention provides a highly intuitive system for printing a proof-sheet (or "order-form") which allows a user to manually mark up portions of the proof-sheet with image selection and manipulation commands. The resulting system can be built in production quantities relatively simply and inexpensively. No substantial additional hardware is required for the printer apart from a wireless receiver and its support hardware. With the cost of such components dropping significantly, it is anticipated that the invention will be commercially cost effective and have great appeal to consumers and professionals alike.

Although the invention has been described by way of example and with reference to particular embodiments it is to he understood that modification and/or improvements may be made without departing from the scope of the appended claims.

Where in the foregoing description reference has been made to integers or elements having known equivalents, then such equivalents are herein incorporated as if individually set forth.

## Claims

1. A method of manipulating digitally stored images, the method including the steps of:
- recording and storing digital representations of one or more images;
- transferring to a printer, capable of generating representations of selected ones of the plurality of images, one or more of the plurality of digital images;
- the printer generating a proof-sheet incorporating a graphical representation of at least one of the images and a plurality of image selection and/or image manipulation user designation areas, wherein the proof-sheet is further is adapted to contain location information which identifies any physical spatial location on the surface of the proof-sheet;
- the user applying indicia to at least one of the user designation areas on the proof-sheet using a pen adapted to record the spatial location of the indicia on the proof-sheet; and
- transmitting the spatial location of the indicia to the printer whereby the printer is adapted to translate the indicia spatial location into printing and/or image manipulation commands.

2. A method as claimed in claim 1 wherein the indicia spatial location information and images are printed concurrently.

3. A method as claimed in claim 1 or 2 including the step of printing the one or more images based on said indicia spatial location information.

4. A method as claimed in any preceding claim wherein the one or more images are stored on read/write capable media wherein the printer is adapted to receive the media therein in order to read the data stored thereon.

5. A method as claimed in any preceding claim wherein the paper incorporates a plurality of glyphs adapted to provide position information to the pen whereby, said position information is communicated to the printer.

6. A method as claimed in any one of claims 1 to 3 wherein the position of the pen is detected using a position location system based on infra-red detection, electromagnetic spatial orientation or the like.

7. A method as claimed in any one of claims 1 to 4 wherein the position of the user-applied indicia are recorded by optically imaging the glyphs at the time that the indicia are applied.

8. A method as claimed in any preceding claim wherein data related to the position of the user-applied indicia are recorded by the pen, then transmitted to the printer.

9. A method as claimed in any one of claims 1 to 7 wherein the data relating to the position of the user-applied indicia are transmitted to the printer substantially continuously, buffered for transmission or otherwise streamed.

10. A method as claimed in any preceding claim wherein the data relating to the position of the user-applied indicia are transmitted using a wireless communication means.

11. A method as claimed in any one of claims 1 to 9 wherein the data is transmitted via physical cable, optical or similar means.

12. A method as claimed in any preceding claim wherein the data is transmitted to the printer at the instigation of the user, preferably by the user activating a switch or sensing means on the pen.

13. A method as claimed in any of claims 1 to 5 and 7 to 12, where dependant on claims 1 to 5, wherein the glyphs are printed on the proof-sheet substantially concurrently with the image representations.

14. A digital image processing system including:
- a printer adapted to receive image data relating to one or more digital images taken by a user, the printer further adapted to produce a proof-sheet detailing the graphical images; and
- a pen, wherein the paper and pen are adapted so that user-applied indicia corresponding to image manipulation commands which applied by the user to the proof-sheet, can be transmitted to the printer by recording the spatial position of the user-applied indicia and transmitting same to the printer.
